# EUROPÄISCHE PATENTSCHRIFT

(11) **EP 3 837 152 B1**
(45) Veröffentlichungstag und Bekanntmachung des Hinweises auf die Patenterteilung: **02.08.2023**
(21) Anmeldenummer: 19752183.4
(22) Anmeldetag: 08.08.2019
(51) Int. Cl.: B62D 15/02, B62D 1/00

(54) **STEUERVERFAHREN UND STEUERVORRICHTUNG FÜR DAS VERBRINGEN EINES NUTZFAHRZEUGS IN EINE ZIELPOSITION, UND NUTZFAHRZEUG DAFÜR**
CONTROL METHOD AND CONTROL DEVICE FOR TRANSFERRING A UTILITY VEHICLE INTO A TARGET POSITION, AND UTILITY VEHICLE THEREFOR
PROCÉDÉ DE COMMANDE ET DISPOSITIF DE COMMANDE POUR TRANSFÉRER UN VÉHICULE UTILITAIRE DANS UNE POSITION VOULUE, ET VÉHICULE UTILITAIRE À CET EFFET

(30) Priorität: 13.08.2018 DE 102018119646; 31.08.2018 DE 102018121272
(43) Veröffentlichungstag der Anmeldung: 23.06.2021
(73) Patentinhaber: ZF CV Systems Europe BV, 1170 Brussels (BE)
(72) Erfinder: WULF, Oliver, 31535 Neustadt (DE)
(74) Vertreter: Rabe, Dirk-Heinrich
(86) Internationale Anmeldenummer: PCT/EP2019/071325
(87) Internationale Veröffentlichungsnummer: WO 2020/035389

(56) Entgegenhaltungen:
- DE-A1- 10 101 342
- DE-A1-102012 007 984
- DE-A1-102016 011 324

## Beschreibung

Die Erfindung betrifft ein Steuerverfahren und eine Steuervorrichtung für das semi-automatische, fernsteuerungsgestützte Verbringen eines angetriebenen Nutzfahrzeugs an eine einen Zielort und eine Zielorientierung umfassende Zielposition, sowie ein dafür eingerichtetes Nutzfahrzeug.

Aus der DE 10 2016 011 324 A1 ist ein Verfahren zur Steuerung eines Zugfahrzeugs bei dessen Heranfahren und Ankuppeln an ein Anhängerfahrzeug bekannt. Der rückwärtige Umfeldbereich hinter dem Zugfahrzeug wird, zum Beispiel mit einer Kamera, erfasst; aus den erfassten Daten werden eine Versatzstrecke und ein Versatzwinkel zwischen dem Zugfahrzeug und dem Anhängerfahrzeug ausgewertet; mindestens eine Fahrtrajektorie mittels derer das Zugfahrzeug autonom zu einem Ankuppelort fahrbar ist wird berechnet, und das Zugfahrzeug wird gemäß der Fahrtrajektorie autonom herangefahren und angekuppelt. Über einen Einsatz des Verfahrens in unkontrollierter Umgebung oder über angemessenen Umgang mit insbesondere unerwartet auftauchenden Hindernissen ist in der Schrift nichts offenbart.

Aus der DE 10 2014 013 219 A1 ist ein Assistenzsystem zum Rangieren eines Gespanns bekannt. Einer im Zugfahrzeug befindlichen Bedienperson werden mehrere Fahrmanöver mit unterschiedlichen Trajektorien bereitgestellt. Nach Auswahl eines Fahrmanövers bewegt das Assistenzsystem das Gespann entlang der dazugehörigen Trajektorie. Die Bedienperson kann diese Bewegung durch eine entsprechende Eingabe in das Assistenzsystem unterbrechen. Mindestens die Querführung, d.h. die Lenkung des Gespanns wird dabei vom Assistenzsystem automatisch durchgeführt. Die Längsführung, zum Beispiel durch Steuerung eines Powertrains und einer Bremsanlage, des Zugfahrzeugs kann entweder von der Bedienperson oder von dem Assistenzsystem durchgeführt werden.

Aus der DE 101 01 342 A1 ist eine Rangiervorrichtung für ein Nutzfahrzeug unter Verwendung einer Fernsteuerung zur Ausführung von fahrerlosen Rangiermanövern bekannt. Die Rangiervorrichtung ermöglicht es einer außerhalb des Fahrzeugs befindlichen Person, eine Zugmaschine des Fahrzeugs in eine Parkposition zu rangieren. Eine angedeutete Weiterbildung betrifft eine Selbstlernfunktion, bei der einmal ausgeführte Rangiervorgänge abgespeichert werden und selbsttätig von der Rangiervorrichtung wiederholt werden können. In letzterem Fall verfügt ein Sender der Fernsteuerung über eine Stoppfunktion, die der Fahrzeugführer aktivieren kann, um damit die selbsttätige Steuerung vorzeitig zu beenden. Die Rangiermanöver der DE 101 01 342 A1 werden entweder vollständig ferngesteuert von der Person, oder vollständig selbsttätig von der eine Selbstlernfunktion aufweisenden Rangiervorrichtung durchgeführt.

Die DE102012007984A1 offenbart ein Rangiersystem zum automatischen Rangieren eines Kraftfahrzeugs, mit einer fahrzeugseitigen Steuereinrichtung, die dazu ausgelegt ist, Steuersignale an eine Antriebs- und/oder Lenkvorrichtung des Kraftfahrzeugs abzugeben und hierdurch einen automatischen Rangiervorgang des Kraftfahrzeugs selbsttätig durchzuführen, und mit einem tragbaren Kommunikationsgerät, welches dazu eingerichtet ist, eine Eingabe, die eine Bedienperson zum Freigeben des Rangiervorgangs an einer Bedieneinrichtung des tragbaren Kommunikationsgeräts vornimmt, zu empfangen und aufgrund dieser Eingabe einen Befehl an die Steuereinrichtung drahtlos zu übertragen, um das Durchführen des Rangiervorgangs zu veranlassen, wobei die Bedieneinrichtung des tragbaren Kommunikationsgeräts zumindest ein Betätigungselement aufweist und wobei die Bedieneinrichtung als berührungssensitives Display ausgebildet ist und das zumindest eine Betätigungselement als ein berührungssensitiver Schaltbereich des Displays bereitgestellt ist und das tragbare Kommunikationsgerät dazu eingerichtet ist, das Rangieren des Kraftfahrzeugs nur solange zu veranlassen, während die Bedienperson das zumindest eine Betätigungselement betätigt hält, und nach Freigeben des Betätigungselements ein Anhalten des Kraftfahrzeugs zu veranlassen.

Der Erfindung liegt die Aufgabe zugrunde, Steuerverfahren und Steuervorrichtungen zum Verbringen eines Zugfahrzeugs in eine Zielposition bereitzustellen, bei denen mit geringem Vorrichtungsaufwand und dennoch einfacher Bedienung ein sicherer Betrieb auch in unkontrollierten Umgebungen möglich wird.

Diese Aufgabe wird von einem Verfahren gemäß Anspruch 1, von einer Vorrichtung gemäß Anspruch 7 und von einem Nutzfahrzeug gemäß Anspruch 9 gelöst.

Unter einer kontrollierten Umgebung wird hier eine Umgebung verstanden, bei der keine unvorhergesehenen Personen oder Gegenstände auftauchen, und bei der unbeabsichtigte Bewegungen einschließlich Wetterereignisse und Änderungen von Stoffeigenschaften nicht auftreten. Dies erfordert typischerweise Bedingungen wie zum Beispiel Zugangskontrolle, künstliche Beleuchtung, Regen- und Wetterschutz. Bei einer Umgebung, die zumindest nicht alle diese Voraussetzungen liefert, spricht man dementsprechend von einer unkontrollierten Umgebung.

Position, wie bei Relativposition oder Zielposition, wird hier verstanden als jeweils eine Ortsangabe und eine Orientierungsangabe umfassend. Die Ortsangabe kann zum Beispiel durch Koordinaten in einem zwei- oder dreidimensionalen Koordinatensystem, absolut oder relativ, erfolgen. Die Orientierungsangabe kann durch eine zwei- oder dreidimensionale Winkelangabe zusammen mit einer Vereinbarung über den Bezugspunkt und den Bezugswinkel erfolgen.

Quersteuerung bezeichnet hier eine Einwirkung auf die Lenkachse des Nutzfahrzeugs. Bei Fahrzeugen mit mehreren gelenkten Achsen kann dies auch eine angemessene Einwirkung auf andere Achsen als die Hauptlenkachse umfassen.

Längssteuerung bezeichnet hier eine Einwirkung auf den Antriebsstrang und das Bremssystem des Nutzfahrzeugs.

Die Zielposition kann eine Ankuppelposition sein, d.h. eine Position im Sinne von Ort und Orientierung, an der das Nutzfahrzeug an ein Anhänger- oder Aufliegerfahrzeug angekuppelt werden kann. Das Sensieren der Zielposition kann hierbei vorteilhaft über einen Sensor und mindestens zwei unterscheidbar detektierbare Referenzmarken auf dem Anhänger- oder Aufliegerfahrzeug erfolgen.

Die Zielposition kann auch eine Beladungsposition sein, d.h. eine Position an einer Laderampe die es ermöglicht, das Nutzfahrzeug zu be- oder entladen. Auch eine solche Position lässt sich vorteilhaft durch vorbekannt positionierte unterscheidbar detektierbare Referenzmarken auf der oder in der Nähe der Laderampe sensieren.

Die Zielposition kann auch eine Aufladeposition sein, d.h. eine Position an der dem Nutzfahrzeug durch Anschluss an eine Versorgungseinrichtung Betriebsmittel wie zum Beispiel Treibstoff, Batterieladung oder Hydraulikflüssigkeit zugeführt werden können. Auch eine solche Position lässt sich vorteilhaft durch vorbekannt positionierte unterscheidbar detektierbare Referenzmarken auf der oder in der Nähe der Versorgungseinrichtung sensieren.

Ein Fortschritt einer Verbringung des Nutzfahrzeugs in die Zielposition kann zum Beispiel durch die seit Beginn der Verbringung zurückgelegte Fahrstrecke bezogen auf die voraussichtliche Gesamtfahrstrecke beschrieben werden. Alternativ kann der Fortschritt zum Beispiel durch die seit Beginn der Verbringung verbrachte Fahrdauer bezogen auf die voraussichtliche Gesamtfahrdauer beschrieben werden.

Der Sensor des Nutzfahrzeugs kann zum Beispiel ein Laserscanner, oder eine Standbildkamera, oder eine Videokamera sein. Eine Bestimmung von Orientierung und Abstand ist mit nur einem Sensor möglich, wenn an der Zielposition mindestens zwei vorbekannt positionierte unterscheidbar detektierbare Referenzmarken angebracht sind.

Steuerverfahren für das Verbringen eines Nutzfahrzeugs in eine Zielposition umfassen gemäß der Erfindung, dass eine Relativposition des Nutzfahrzeuges relativ zur Zielposition sensiert wird. Sodann wird aus der Relativposition eine automatische, regelungsbasierte Quersteuerung des Nutzfahrzeugs hergeleitet in einer Weise, dass die Quersteuerung zusammen mit einer Längssteuerung das Nutzfahrzeug in die Zielposition verbringt. Erfindungsgemäß wird dabei zusätzlich mit einer Fernsteuerempfangsvorrichtung des Nutzfahrzeugs das Vorliegen eines von einer außerhalb des Nutzfahrzeugs befindlichen Bedienperson mit einem Fernsteuersender erzeugten Aktivierungssignals überprüft.

Die Verbringung des Nutzfahrzeugs gemäß der Quersteuerung und der Längssteuerung wird erst bei erstmaligem Vorliegen des Aktivierungssignals eingeleitet, und bei Ausbleiben des Aktivierungssignals wird die Verbringung unterbrochen und das Nutzfahrzeug zum Stillstand gebracht zum Beispiel durch eine geeignete Bremsmaßnahme.

Das Nutzfahrzeug muss hierzu einen Sensor aufweisen, und die Zielposition muss sensierbar sein, zum Beispiel durch sensierbare Referenzmarken.

In einer vorteilhaften Erweiterung des Steuerverfahrens wird mit der Fernsteuerempfangsvorrichtung zusätzlich ein von der Bedienperson eingegebenes zeitabhängiges Längssteuersignal empfangen und die Verbringung erfolgt gemäß der Quersteuerung und des empfangenen Längssteuersignals. Durch diesen gemischten Betrieb, bei dem die Quersteuerung automatisch und die Längssteuerung per Fernbedienung erfolgt, kann die abgesessene Bedienperson bei geeigneter Positionierung alle Gegebenheiten in der Umgebung des Verbringungsvorgangs beim Eingeben des Längssteuersignals mit berücksichtigen. Aufwändige zusätzliche Sensorik zur Überwachung auf Sicherheitsrisiken in unkontrollierter Umgebung wird somit vermieden.

In einer weiteren vorteilhaften Erweiterung ist das Steuerverfahren so ausgebildet, dass eine im Zuge der Längssteuerung erlaubte Maximalgeschwindigkeit begrenzt wird. Diese Begrenzung kann vorteilhaft von einer momentanen Relativposition, von einem Fortschritt der Verbringung und/oder von einem aktuellen oder bevorstehenden Zustand der Quersteuerung abhängig gewählt werden. Insbesondere bei starken Lenkvorgängen im Sinne von großen Lenkwinkeln wird die Maximalgeschwindigkeit vorteilhafterweise weiter reduziert. Dadurch dass die Quersteuerung = Lenkung von dem Steuerverfahren bestimmt wird, ist eine Reduktion der Maximalgeschwindigkeit auch vorausschauend möglich. Dies ist besonders bei der Steuerung großer schwerer und daher massenträger Nutzfahrzeuge vorteilhaft.

In einer weiteren vorteilhaften Erweiterung des Steuerverfahrens wird mit der Fernsteuerempfangsvorrichtung zusätzlich ein von der Bedienperson erzeugtes Niveauregelsignal empfangen und während der Verbringung eine im Nutzfahrzeug vorhandene Niveauregelvorrichtung gemäß dem empfangenen Niveauregelsignal geführt. Dies ist zum Beispiel vorteilhaft, wenn die Zielposition eine Ankuppelposition ist, weil solche Kupplungen zum Einrasten immer auch eine genaue Höheneinstellung des Zugfahrzeugs gegenüber dem Anhänger/Auflieger erfordern. Ein von der Bedienperson vorgebbares Niveauregelsignal ist auch vorteilhaft, wenn die Zielposition eine Beladungsposition ist, um einen stufenfreien Übergang von der Laderampe ins Innere des Nutzfahrzeugs zu erreichen.

Erfindungsgemäß wird beim erstmaligen Sensieren der Relativposition als Anfangsposition kontrolliert, ob von dieser Anfangsposition ein Verbringen zur Zielposition überhaupt möglich ist. Widrigenfalls wird die Verbringung nicht eingeleitet und die Bedienperson kann hierüber informiert werden. In einer weiteren vorteilhaften Erweiterung des Steuerverfahrens wird während des Verbringens kontrolliert, ob die restliche Verbringung überhaupt wie vorgesehen und schadensfrei beendet werden kann. Widrigenfalls wird die Verbringung abgebrochen; wieder kann die Bedienperson hierüber informiert werden.

Vorteilhafte Ausführungsformen der Erfindung ergeben sich aus den Ansprüchen sowie aus den anhand der Zeichnungen näher erläuterten Ausführungsbeispielen. In den Zeichnungen zeigen:
- Fig. 1: schematisch in Seitenansicht einen Anwendungsfall, wo die Zielposition eine Ankuppelposition ist,
- Fig. 2: schematisch in Draufsicht den Anwendungsfall, wo die Zielposition eine Ankuppelposition ist,
- Fig. 3: schematisch in Seitenansicht einen Anwendungsfall, wo die Zielposition eine Beladungsposition ist,
- Fig. 4: schematisch in Draufsicht den Anwendungsfall, wo die Zielposition eine Beladungsposition ist,
- Fig. 5: schematisch in Seitenansicht einen Anwendungsfall, wo die Zielposition eine Aufladeposition ist,
- Fig. 6: schematisch in Draufsicht den Anwendungsfall, wo die Zielposition eine Aufladeposition ist,
- Fig. 7: eine Veranschaulichung in einer Draufsicht des Begriffs des Fortschritts einer Verbringung,
- Fig. 8: ein Blockdiagramm zur Erläuterung eines Verfahrens gemäß der Erfindung,
- Fig. 9: ein Blockdiagramm zur Erläuterung einer vorteilhaften Erweiterung eines Verfahrens gemäß der Erfindung,
- Fig. 10: ein Blockdiagramm zur Erläuterung einer weiteren vorteilhaften Erweiterung eines Verfahrens gemäß der Erfindung,
- Fig. 11: ein Blockdiagramm zur Erläuterung einer Steuervorrichtung 1100 gemäß der Erfindung,
- Fig. 12: schematisch in Draufsicht einen Anwendungsfall mit abgesessener Bedienperson,
- Fig. 13: beispielhafte Verläufe eines Längssteuersignals und einer Quersteuerung über einer gemeinsamen Zeitachse,

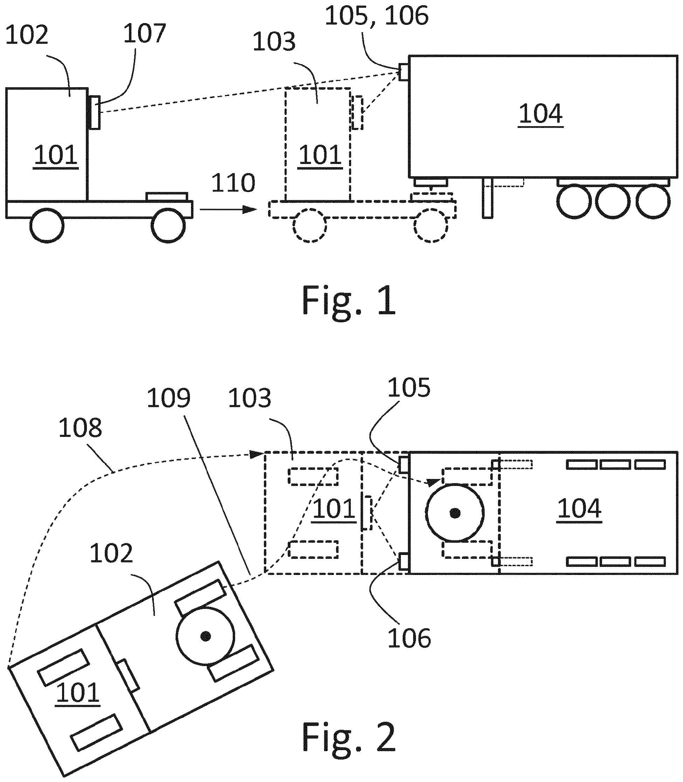

Fig. 1 zeigt schematisch in Seitenansicht einen Anwendungsfall, wo die Zielposition 103 eine Ankuppelposition ist. Fig. 2 zeigt diesen Anwendungsfall schematisch in Draufsicht. Das Nutzfahrzeug 101 ist in seiner Anfangsposition 102 und in seiner Zielposition 103 gezeigt. Von der Anfangsposition 102 wird das Nutzfahrzeug 101 entlang eines Fahrweges 108, 109, 110 in seine Zielposition 103 verbracht. An der Zielposition 103 kann das Nutzfahrzeug 101 an ein Aufliegerfahrzeug 104 angekuppelt werden. Das Nutzfahrzeug 101 umfasst einen Sensor 107. Das Sensieren der Zielposition 103 kann hierbei vorteilhaft über mindestens zwei unterscheidbar detektierbare Referenzmarken 105, 106 auf dem Aufliegerfahrzeug 104 erfolgen. Während der Verbringung misst der Sensor 107 Richtung und Abstand zu den beiden Referenzmarken 105, 106.

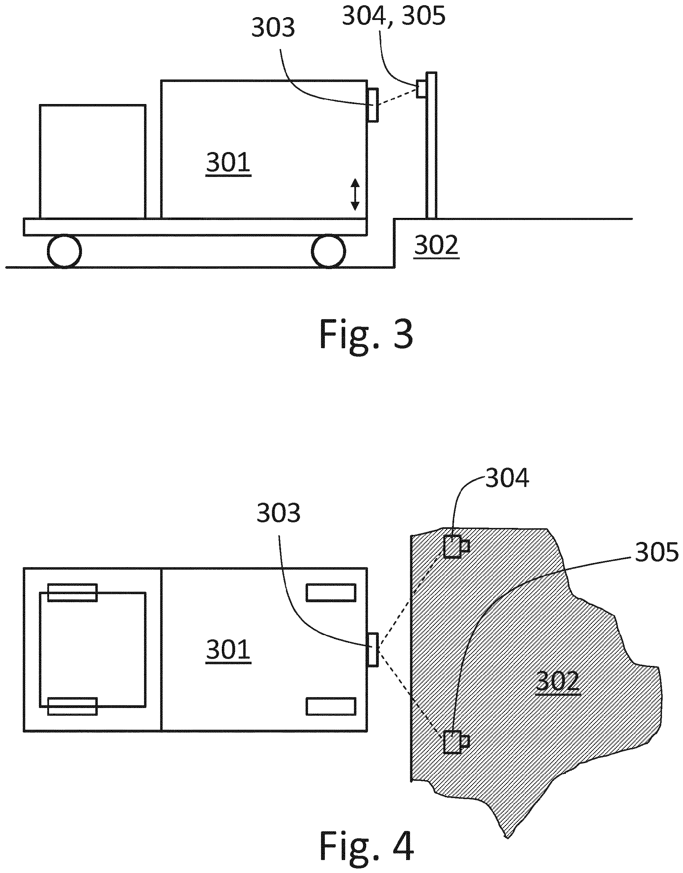

Fig. 3 zeigt schematisch in Seitenansicht einen Anwendungsfall, wo die Zielposition eine Beladungsposition ist. Fig. 4 zeigt diesen Anwendungsfall schematisch in Draufsicht. Das einen Sensor 303 umfassende Nutzfahrzeug 301 ist an seiner Zielposition an einer Laderampe 302 gezeigt. Die Zielposition ist relativ zur Laderampe 302 so festgelegt, dass das Nutzfahrzeug 301 an ihr be- oder entladen werden kann. Auch eine solche Position lässt sich mit dem Sensor 303 vorteilhaft durch vorbekannt positionierte unterscheidbar detektierbare Referenzmarken 304, 305 auf der oder in der Nähe der Laderampe 302 sensieren. Der Sensor 303 misst Richtung und Abstand zu den beiden Referenzmarken 304, 305.

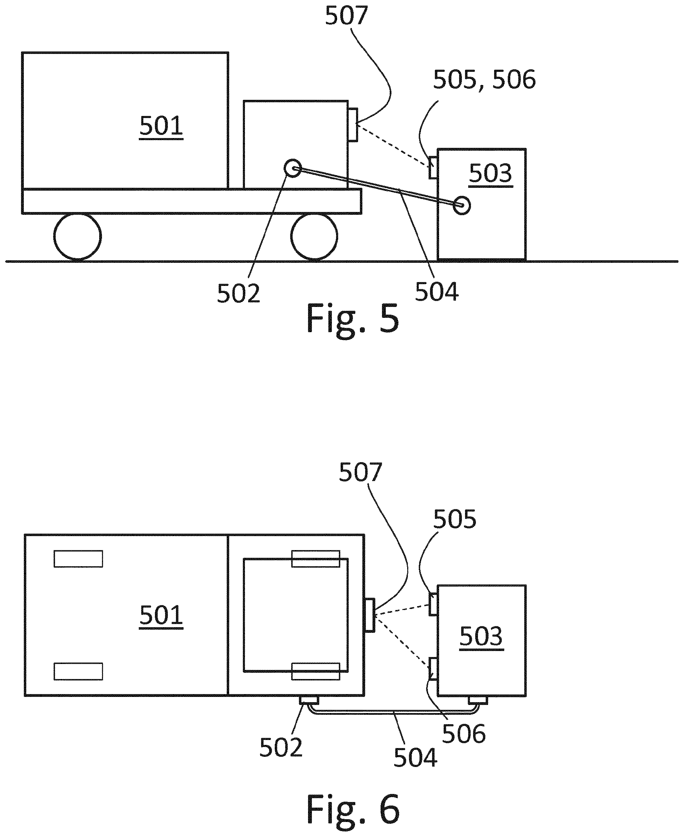

Fig. 5 zeigt schematisch in Seitenansicht einen Anwendungsfall, wo die Zielposition eine Aufladeposition ist. Fig. 6 zeigt diesen Anwendungsfall schematisch in Draufsicht. Das einen Betriebsmittelanschluss 502 und einen Sensor 507 umfassende Nutzfahrzeug 501 ist an seiner Zielposition an einer Versorgungseinrichtung 503 gezeigt. Die Zielposition ist so festgelegt, dass an ihr dem Nutzfahrzeug 501 über eine Betriebsmittelleitung 504 Betriebsmittel wie zum Beispiel Treibstoff, Batterieladung oder Hydraulikflüssigkeit zugeführt werden können. Auch eine solche Position lässt sich mit dem Sensor 507 vorteilhaft durch vorbekannt positionierte unterscheidbar detektierbare Referenzmarken 505, 506 auf der oder in der Nähe der Versorgungseinrichtung 503 sensieren. Der Sensor 507 misst Richtung und Abstand zu den beiden Referenzmarken 505, 506.

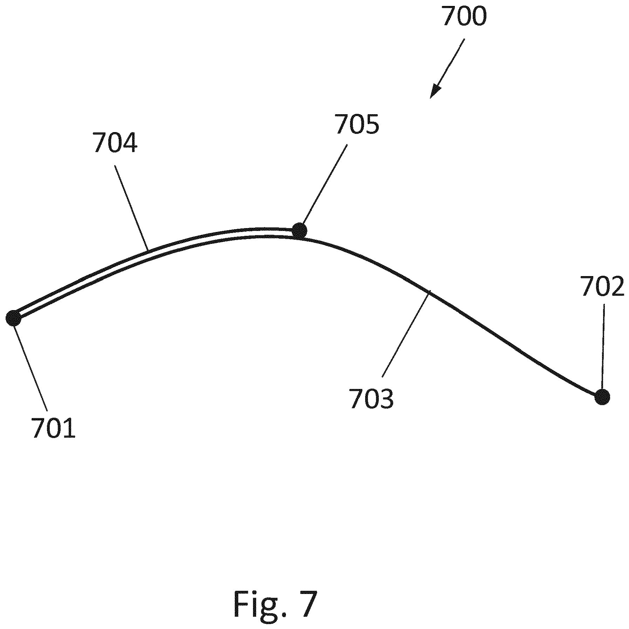

Fig. 7 veranschaulicht in einer Draufsicht den Begriff des Fortschritts 700 einer Verbringung. Ausgehend von einer Anfangsposition 701 soll das hier nicht gezeigte Nutzfahrzeug insgesamt entlang eines Fahrweges 703 an eine Zielposition 702 verbracht werden. Zu einem beliebigen Zeitpunkt während der Verbringung sei von dem Fahrweg 703 ein erster Wegteil 704 bis zu einer Momentanposition 705 bereits durchlaufen. Der diesem Zeitpunkt zugeordnete Fortschritt 700 der Verbringung kann dann durch die seit Beginn 701 der Verbringung zurückgelegte Fahrstrecke, d.h. die Weglänge des ersten Wegteils 704 bezogen auf die voraussichtliche Gesamtfahrstrecke, d.h. die Weglänge des Fahrweges 703 beschrieben werden.

Der Sensor 107, 303, 507, 1101 des Nutzfahrzeugs 101, 301, 501 kann zum Beispiel ein Laserscanner, oder eine Standbildkamera, oder eine Videokamera sein. Eine Bestimmung von Orientierung und Abstand ist mit nur einem Sensor möglich, wenn an der Zielposition mindestens zwei vorbekannt positionierte unterscheidbar detektierbare Referenzmarken 105, 106, 304, 305, 505, 506 angebracht sind.

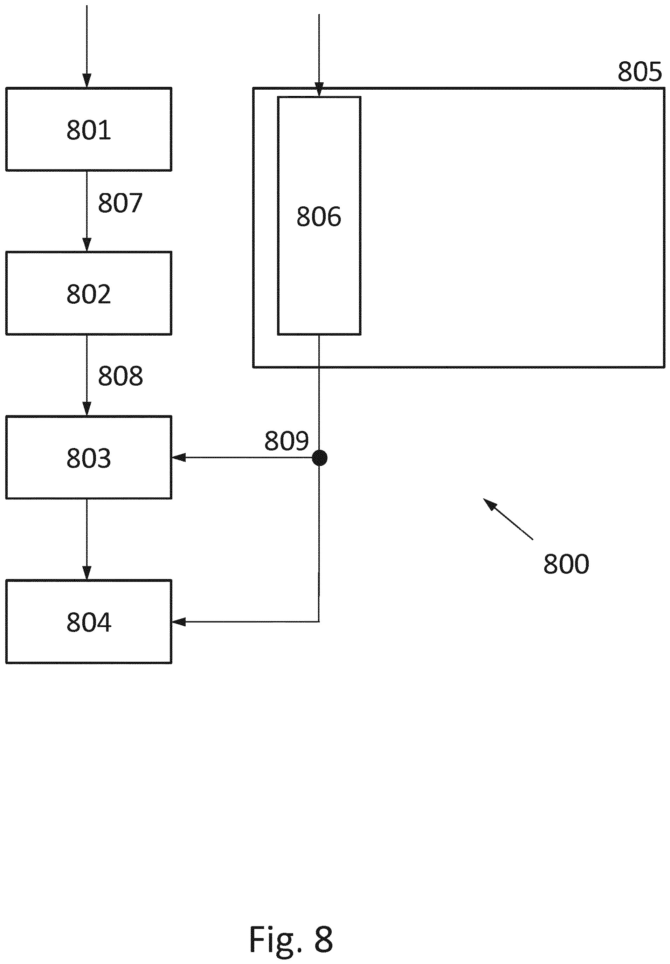

Fig. 8 zeigt ein Blockdiagramm zur Erläuterung eines Verfahrens 800 gemäß der Erfindung. Ein solches Steuerverfahren 800 für das Verbringen eines Nutzfahrzeugs in eine Zielposition umfasst:
- sensieren 801 einer Relativposition 807 des Nutzfahrzeuges relativ zur Zielposition,
- sodann herleiten 802, aus der Relativposition 807, einer automatischen, regelungsbasierten Quersteuerung 808 des Nutzfahrzeugs in einer Weise, dass die Quersteuerung 808 zusammen mit einer Längssteuerung das Nutzfahrzeug in die Zielposition verbringt 803,
- zusätzlich mit einer Fernsteuerempfangsvorrichtung 805 des Nutzfahrzeugs überprüfen 806 ob ein von einer außerhalb des Nutzfahrzeugs befindlichen Bedienperson 1201 mit einem Fernsteuersender 1202 erzeugtes Aktivierungssignal 809 vorliegt,
- einleiten 803 der Verbringung des Nutzfahrzeugs gemäß der Quersteuerung 808 und der Längssteuerung erst bei erstmaligem Vorliegen des Aktivierungssignals 809, und
- bei Ausbleiben des Aktivierungssignals 809, unterbrechen 804 der Verbringung und zum Stillstand bringen des Nutzfahrzeugs, zum Beispiel durch eine geeignete Bremsmaßnahme.

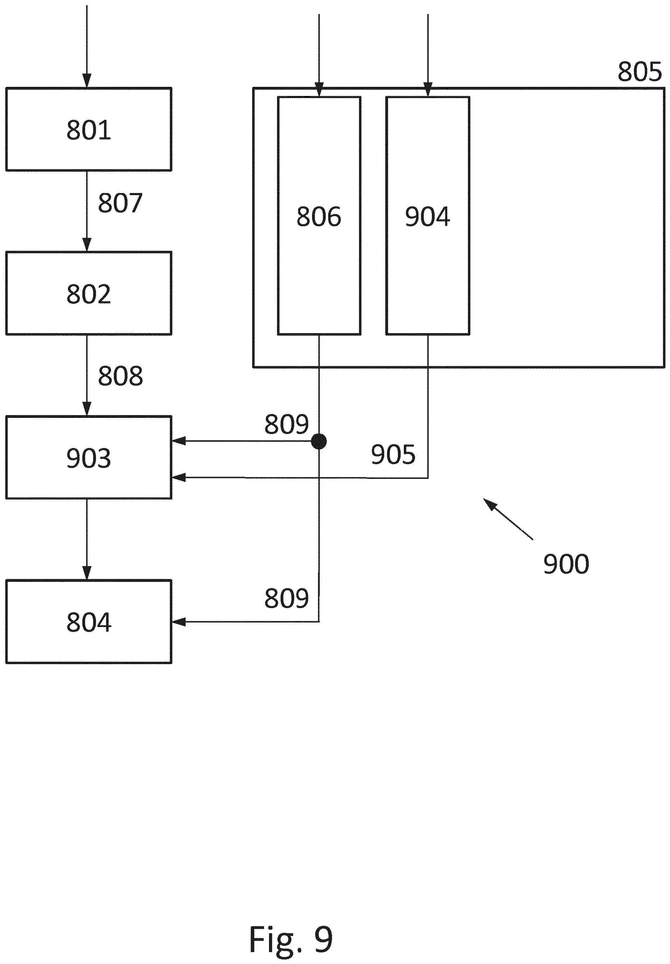

Fig. 9 zeigt ein Blockdiagramm zur Erläuterung einer vorteilhaften Erweiterung 900 eines Verfahrens gemäß der Erfindung. Die Erweiterung 900 umfasst:
- zusätzliches Empfangen 904, mit der Fernsteuerempfangsvorrichtung 805, eines von der Bedienperson 1201 eingegebenen zeitabhängigen Längssteuersignals 905,
- Durchführen 903 der Verbringung gemäß der Quersteuerung 808 und des empfangenen Längssteuersignals 905.

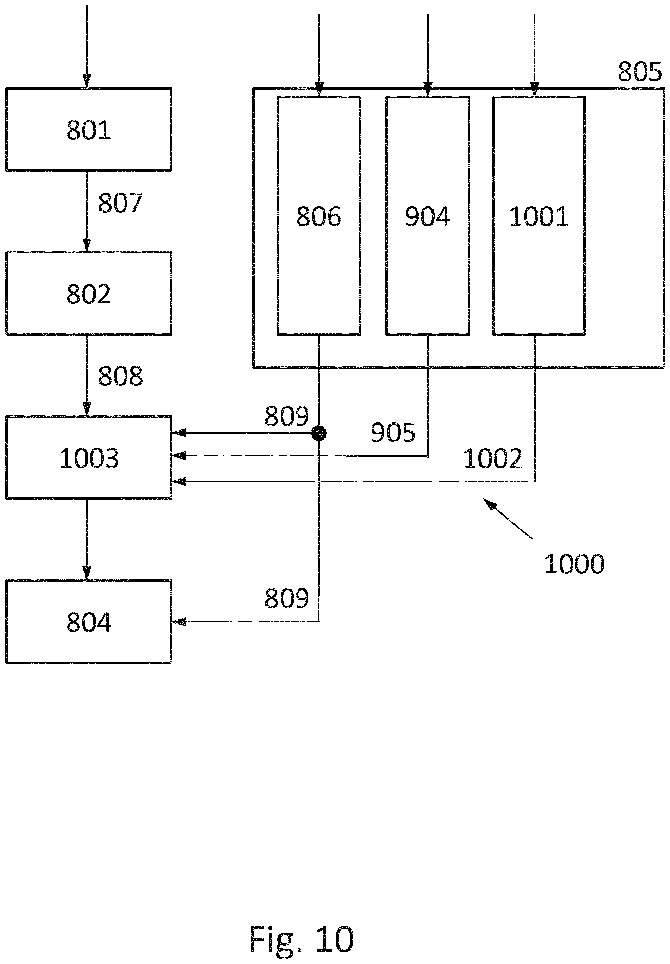

Fig. 10 zeigt ein Blockdiagramm zur Erläuterung einer weiteren vorteilhaften Erweiterung 1000 eines Verfahrens gemäß der Erfindung. Die Erweiterung 1000 umfasst:
- ein zusätzliches Empfangen 1001, mit der Fernsteuerempfangsvorrichtung 805, eines von der Bedienperson 1201 erzeugten Niveauregelsignals 1002,
- ein Führen 1003, während der Verbringung, einer im Nutzfahrzeug vorhandenen Niveauregelvorrichtung gemäß dem empfangenen Niveauregelsignal 1002.

Das fernbediente Führen 1003 der Niveauregelvorrichtung durch die Bedienperson 1201 ist zum dann Beispiel vorteilhaft, wenn die Zielposition eine Ankuppelposition 103 ist, weil solche Kupplungen zum Einrasten immer auch eine genügend genaue Höheneinstellung des Zugfahrzeugs 101 gegenüber dem Anhänger/Auflieger 104 erfordern. Ein von der Bedienperson 1201 vorgebbares Niveauregelsignal ist auch vorteilhaft, wenn die Zielposition eine Beladungsposition an einer Laderampe 302 ist, weil damit ein stufenfreier Übergang von der Laderampe 302 ins Innere des Nutzfahrzeugs 301 ermöglicht wird.

Weiters vorteilhaft wird mit der Fernsteuerempfangsvorrichtung 805 zusätzlich ein von der Bedienperson 1201 erzeugtes Niveauregelsignal 1002 empfangen und während der Verbringung 1003 wird eine Niveauregelvorrichtung des Nutzfahrzeugs gemäß dem empfangenen Niveauregelsignal 1002 geführt.

Erfindungsgemäß wird beim erstmaligen Sensieren 801 der Relativposition als Anfangsposition kontrolliert, ob von der Anfangsposition ein Verbringen zur Zielposition überhaupt möglich ist, und widrigenfalls wird die Verbringung nicht eingeleitet. Optional kann die Bedienperson 1201 hierüber informiert werden.

Weiters vorteilhaft wird während des Verbringens kontrolliert, ob die restliche Verbringung überhaupt wie vorgesehen und schadensfrei beendet werden kann, und widrigenfalls wird die Verbringung abgebrochen. Optional kann die Bedienperson 1201 hierüber informiert werden.

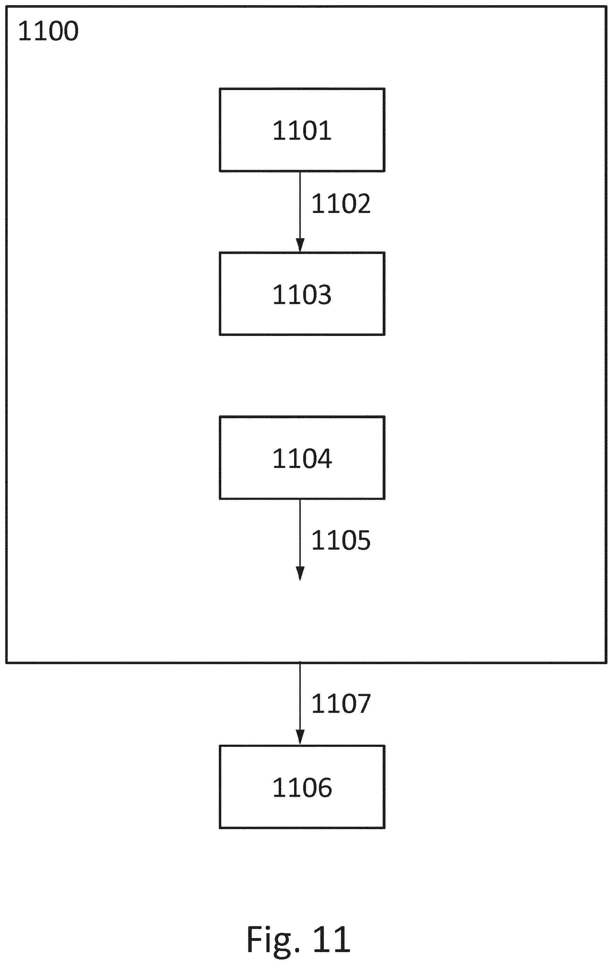

Fig. 11 zeigt ein Blockdiagramm zur Erläuterung einer Steuervorrichtung 1100 gemäß der Erfindung. Die Steuervorrichtung 1100 umfasst:
- einen Sensor 1101 eingerichtet eine Relativposition 1102 des Nutzfahrzeugs relativ zur Zielposition zu sensieren,
- eine Quersteuervorrichtung 1103 eingerichtet, um auf Basis der sensierten Relativposition 1102 das Nutzfahrzeug automatisch und regelungsbasiert so querzusteuern, dass die Quersteuerung zusammen mit einer Längssteuerung das Nutzfahrzeug durch Einwirkung 1107 auf eine Einwirkvorrichtung 1106 des Nutzfahrzeugs in die Zielposition verbringt, und
- eine Fernsteuerempfangsvorrichtung 1104 eingerichtet, ein Vorliegen eines von einer außerhalb des Nutzfahrzeugs befindlichen Bedienperson 1201 mit einem Fernsteuersender 1202 erzeugten Aktivierungssignals 1105 zu überprüfen.

Die Steuervorrichtung 1100 ist eingerichtet, das Verbringen des Nutzfahrzeugs gemäß der Quersteuerung und der Längssteuerung erst bei erstmaligem Vorliegen des Aktivierungssignals 1105 zu beginnen, und ist eingerichtet, bei Ausbleiben des Aktivierungssignals 1105 das weitere Verbringen zu unterbrechen und das Nutzfahrzeug durch Einwirkung 1107 auf die Einwirkvorrichtung 1106 zum Stillstand zu bringen.

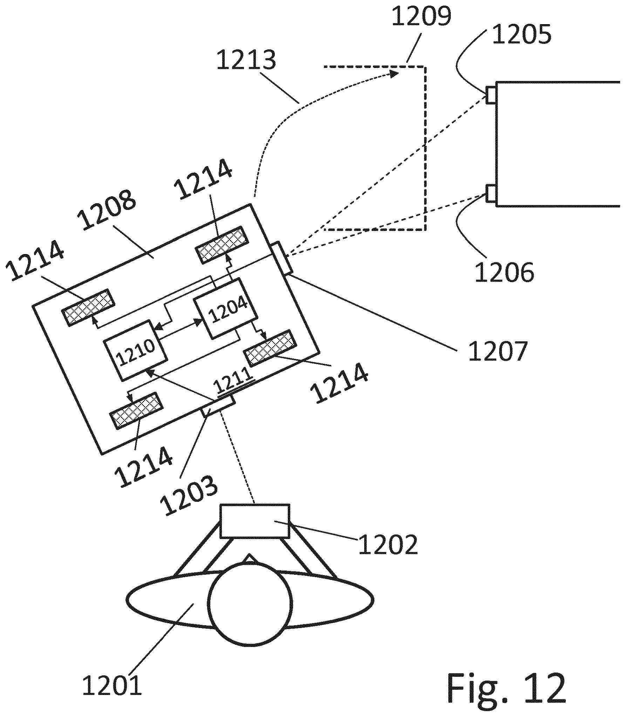

Fig. 12 zeigt schematisch in Draufsicht einen Anwendungsfall mit einer vom Nutzfahrzeug 1211 abgesessenen Bedienperson 1201. Das Nutzfahrzeug 1211 ist in seiner Anfangsposition 1208 gezeigt, und in seiner Zielposition 1209, an die es entlang eines Fahrweges 1213 verbracht werden soll, gestrichelt angedeutet. Das Nutzfahrzeug umfasst:
- eine Einwirkvorrichtung 1204, mit der zum Beispiel auf die Räder 1214 eingewirkt werden kann,
- eine Steuervorrichtung 1210 gemäß der Erfindung zur Verbringung des Nutzfahrzeugs 1211 von seiner Anfangsposition 1208 in seine Zielposition 1209 über die Einwirkvorrichtung 1204,
- eine Fernsteuerempfangsvorrichtung 1203, eingerichtet zum Empfangen von Fernsteuersignalen 1212, die die Bedienperson 1201 mit einem Fernsteuersender 1202 erzeugt, und
- einen Sensor 1207 so eingerichtet, dass er der Steuervorrichtung 1210 Richtung und Entfernung zu Referenzmarken 1205, 1206 bereitstellt.

Vorteilhaft ist die Fernsteuerempfangsvorrichtung 805, 1203 eingerichtet, zusätzlich ein von der Bedienperson 1201 eingegebenes zeitabhängiges Längssteuersignal 905 zu empfangen, und die Steuervorrichtung 1100, 1210 ist eingerichtet, die Verbringung 1213 gemäß der Quersteuerung 808 und des empfangenen Längssteuersignals 905 durchzuführen.

Ein Nutzfahrzeug 101, 301, 501, 1211 gemäß der Erfindung ist eingerichtet, ein Steuerverfahren 800 nach Anspruch 1 bis 6 durchzuführen, und/oder weist eine Steuervorrichtung 1100, 1210 nach Anspruch 7 bis 8 auf.

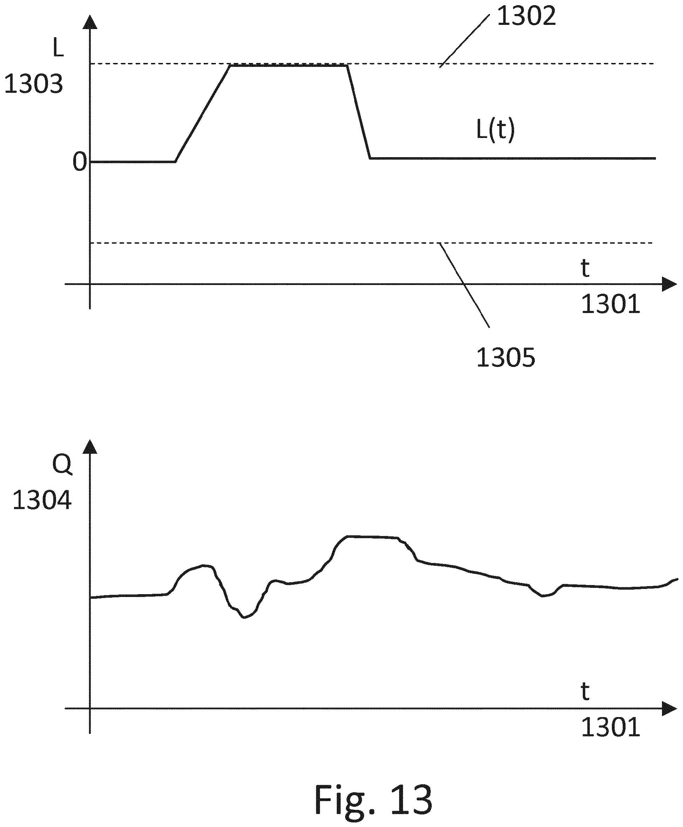

Fig. 13 zeigt beispielhafte Verläufe eines Längssteuersignals L 1303 und einer Quersteuerung Q 1304 über einer gemeinsamen Zeitachse t 1301. Die Figur zeigt, dass das Längssteuersignal L im Sinne einer Momentangeschwindigkeit eine positive Maximalgeschwindigkeit 1302 und eine negative Maximalgeschwindigkeit 1305 nie überschreitet. Die Maximalgeschwindigkeiten 1302, 1305 können auch dynamisch zum Beispiel an unterschiedliche Fahrsituationen angepasst werden.

### Bezugszeichenliste (Bestandteil der Beschreibung)

- 101: Nutzfahrzeug
- 102: Anfangsposition
- 103: Zielposition
- 104: Aufliegerfahrzeug
- 105: Referenzmarke
- 106: Referenzmarke
- 107: Sensor
- 108: Fahrweg
- 109: Fahrweg
- 110: Fahrweg
- 301: Nutzfahrzeug
- 302: Laderampe
- 303: Sensor
- 304: Referenzmarke
- 305: Referenzmarke
- 501: Nutzfahrzeug
- 502: Betriebsmittelanschluss
- 503: Versorgungseinrichtung
- 504: Betriebsmittelleitung
- 505: Referenzmarke
- 506: Referenzmarke
- 507: Sensor
- 701: Anfangsposition, Beginn der Verbringung
- 702: Zielposition
- 703: Fahrweg
- 704: Wegteil
- 705: Momentanposition
- 800: Verfahren
- 801: Verfahrensschritt Sensieren
- 802: Verfahrensschritt Herleiten
- 803: Verfahrensschritt Einleiten der Verbringung, Verbringen
- 804: Verfahrensschritt Unterbrechen der Verbringung bzw. Bremsen
- 805: Fernsteuerempfangsvorrichtung
- 806: Verfahrensschritt Überprüfen auf Aktivierungssignal
- 807: Relativposition
- 808: Quersteuerung
- 809: Aktivierungssignal
- 900: Erweiterung des Verfahrens
- 903: Verfahrensschritt Durchführen der Verbringung, Verbringen
- 904: Verfahrensschritt Empfangen eines Längssteuersignals
- 905: Längssteuersignal
- 1000: Erweiterung des Verfahrens
- 1001: Verfahrensschritt Empfangen eines Niveauregelsignals
- 1002: Niveauregelsignal
- 1003: Verfahrensschritt Verbringen mit Führen einer Niveauregelvorrichtung
- 1100: Steuervorrichtung
- 1101: Sensor
- 1102: Relativposition
- 1103: Quersteuervorrichtung
- 1104: Fernsteuerempfangsvorrichtung
- 1105: Aktivierungssignal
- 1106: Einwirkvorrichtung
- 1107: Verfahrensschritt Einwirkung
- 1201: Bedienperson
- 1202: Fernsteuersender
- 1203: Fernsteuerempfangsvorrichtung
- 1204: Einwirkvorrichtung
- 1205: Referenzmarke
- 1206: Referenzmarke
- 1207: Sensor
- 1208: Anfangsposition
- 1209: Zielposition
- 1210: Steuervorrichtung
- 1211: Nutzfahrzeug
- 1212: Fernsteuersignal
- 1213: Fahrweg, Verbringung
- 1214: Räder
- 1301: Zeitachse t
- 1302: positive Maximalgeschwindigkeit
- 1303: Längssteuersignal L
- 1304: Quersteuerung Q
- 1305: negative Maximalgeschwindigkeit

## Patentansprüche

1. Ein Steuerverfahren für das semi-automatische Verbringen eines einen Sensor aufweisenden angetriebenen Nutzfahrzeugs in eine sensierbare Zielposition, umfassend ein Sensieren einer Relativposition des Nutzfahrzeuges relativ zur Zielposition, und hergeleitet aus der Relativposition eine automatische, regelungsbasierte Quersteuerung des Nutzfahrzeugs in einer Weise, dass die Quersteuerung zusammen mit einer Längssteuerung das Nutzfahrzeug in die Zielposition verbringt, wobei
- zusätzlich mit einem Fernsteuerempfänger des Nutzfahrzeugs das Vorliegen eines von einer außerhalb des Nutzfahrzeugs befindlichen Bedienperson mit einer Fernsteuerung erzeugten Längssteuersignals überprüft wird,
- wobei die Verbringung des Nutzfahrzeugs gemäß der Quersteuerung und der Längssteuerung erst bei erstmaligem Vorliegen des Aktivierungssignals eingeleitet wird, und
- wobei bei Ausbleiben des Aktivierungssignals die Verbringung unterbrochen wird und das Nutzfahrzeug zum Stillstand gebracht wird, **dadurch gekennzeichnet, dass** beim erstmaligen Sensieren der Relativposition als Anfangsposition kontrolliert wird, ob von der Anfangsposition ein Verbringen zur Zielposition überhaupt möglich ist, und widrigenfalls die Verbringung nicht eingeleitet und insbesondere die Bedienperson hierüber informiert wird.

2. Das Steuerverfahren nach Anspruch 1, wobei mit dem Fernsteuerempfänger zusätzlich ein von der Bedienperson eingegebenes zeitabhängiges Längssteuersignal empfangen wird und die Verbringung gemäß der Quersteuerung und des empfangenen Längssteuersignals erfolgt.

3. Das Steuerverfahren nach einem der vorhergehenden Ansprüche, umfassend ein Begrenzen der im Zuge der Längssteuerung erlaubten Maximalgeschwindigkeit.

4. Das Steuerverfahren nach Anspruch 3, wobei die Begrenzung der Maximalgeschwindigkeit von einer momentanen Relativposition, von einem Fortschritt der Verbringung und/oder von einem aktuellen oder bevorstehenden Zustand der Quersteuerung abhängt.

5. Das Steuerverfahren nach einem der vorherigen Ansprüche, wobei mit dem der Fernsteuerempfänger zusätzlich ein von der Bedienperson erzeugtes Niveauregelsignal empfangen wird und während der Verbringung eine Niveauregelvorrichtung des Nutzfahrzeugs gemäß dem empfangenen Niveauregelsignal geführt wird.

6. Das Steuerverfahren nach einem der vorherigen Ansprüche, wobei während des Verbringens kontrolliert wird, ob die restliche Verbringung überhaupt wie vorgesehen und schadensfrei beendet werden kann, und widrigenfalls die Verbringung abgebrochen und insbesondere die Bedienperson hierüber informiert wird.

7. Eine Steuervorrichtung für das semi-automatische Verbringen eines angetriebenen Nutzfahrzeugs mit elektronischen Beeinflussungssystemen an eine sensierbare Zielposition, umfassend
- Sensiermittel eingerichtet eine Relativposition des Nutzfahrzeugs relativ zur Zielposition zu sensieren, und
- Quersteuermittel eingerichtet, um auf Basis der sensierten Relativposition das Nutzfahrzeug automatisch und regelungsbasiert so querzusteuern, dass die Quersteuerung zusammen mit einer Längssteuerung das Nutzfahrzeug durch Einwirkung auf die Einwirkmittel in die Zielposition verbringt,
- Fernsteuerempfangsmittel, die eingerichtet sind, ein Vorliegen eines von einer außerhalb des Nutzfahrzeugs befindlichen Bedienperson mit einer Fernsteuerung erzeugten Aktivierungssignals zu überprüfen,
- wobei die Steuervorrichtung eingerichtet ist, das Verbringen des Nutzfahrzeugs gemäß der Quersteuerung und der Längssteuerung erst bei erstmaligem Vorliegen des Aktivierungssignals zu beginnen, und bei Ausbleiben des Aktivierungssignals das weitere Verbringen zu unterbrechen und das Nutzfahrzeug zum Stillstand zu bringen, **dadurch gekennzeichnet, dass** beim erstmaligen Sensieren der Relativposition als Anfangsposition kontrolliert wird, ob von der Anfangsposition ein Verbringen zur Zielposition überhaupt möglich ist, und widrigenfalls die Verbringung nicht eingeleitet und insbesondere die Bedienperson hierüber informiert wird.

8. Die Steuervorrichtung nach Anspruch 7, wobei der Fernsteuerempfänger eingerichtet ist, zusätzlich ein von der Bedienperson eingegebenes zeitabhängiges Längssteuersignal zu empfangen, und die Verbringung gemäß der Quersteuerung und des empfangenen Längssteuersignals erfolgt.

9. Ein Nutzfahrzeug, insbesondere angetriebenes Zugfahrzeug, mit elektronischen Beeinflussungssystemen, **dadurch gekennzeichnet, dass** es eingerichtet ist, das Steuerverfahren nach Anspruch 1 bis 6 durchzuführen, und/oder dass es eine Steuervorrichtung nach Anspruch 7 bis 8 aufweist.

## Claims

1. Control method for semi-automatically transferring a driven utility vehicle having a sensor into a sensor-identifiable target position, the method comprising sensing a relative position of the utility vehicle relative to the target position and, derived from the relative position, automatic, regulation-based transverse control of the utility vehicle in such a way that, together with a longitudinal control, the transverse control transfers the utility vehicle into the target position,
- using a remote control receiver of the utility vehicle, the presence of a longitudinal control signal generated by an operator located outside the utility vehicle using a remote control additionally being checked,
- the transfer of the utility vehicle in accordance with the transverse control and the longitudinal control being initiated only when the activation signal is present for the first time, and
- the transfer being interrupted and the utility vehicle being brought to a standstill in the absence of the activation signal, **characterized in that** when the relative position is sensed for the first time as the starting position, it is checked whether a transfer to the target position is at all possible from the starting position, and, if this is not the case, the transfer is not initiated and, in particular, the operator is informed in this regard.

2. Control method according to claim 1, wherein a time-dependent longitudinal control signal, input by the operator, is additionally received using the remote control receiver and the transfer takes place in accordance with the transverse control and the received longitudinal control signal.

3. Control method according to either of the preceding claims, comprising limiting the maximum speed allowed in the course of the longitudinal control.

4. Control method according to claim 3, wherein the limitation of the maximum speed depends on a present relative position, on progress of the transfer and/or on a current or imminent state of the transverse control.

5. Control method according to any of the preceding claims, wherein a level control signal generated by the operator is additionally received using the remote control receiver and, during the transfer, a level control device of the utility vehicle is guided in accordance with the received level control signal.

6. Control method according to any of the preceding claims, wherein, during the transfer, it is checked whether the rest of the transfer can be completed at all as intended and without damage, and, if this is not the case, the transfer is interrupted and in particular the operator is informed in this regard.

7. Control device for semi-automatically transferring a driven utility vehicle using electronic influencing systems to a sensor-identifiable target position, comprising
- sensing means designed to sense a relative position of the utility vehicle relative to the target position, and
- transverse control means designed to transversely control the utility vehicle, on the basis of the sensed relative position, in an automatic and regulation-based manner in such a way that, together with a longitudinal control, the transverse control transfers the utility vehicle into the target position by influencing the influencing means,
- remote control receiving means which are designed to check the presence of an activation signal generated by an operator located outside the utility vehicle using a remote control,
- the control device being designed to start the transfer of the utility vehicle in accordance with the transverse control and the longitudinal control only when the activation signal is present for the first time, and, in the absence of the activation signal, to interrupt the further transfer and to bring the utility vehicle to a standstill, **characterized in that,** when the relative position is sensed for the first time as the starting position, it is checked whether a transfer to the target position is at all possible from the starting position, and, if this is not the case, the transfer is not initiated and, in particular, the operator is informed in this regard.

8. Control device according to claim 7, wherein the remote control receiver is designed to additionally receive a time-dependent longitudinal control signal, input by the operator, and the transfer takes place in accordance with the transverse control and the received longitudinal control signal.

9. Utility vehicle, in particular a driven towing vehicle, comprising electronic influencing systems, **characterized in that** it is designed to perform the control method according to claim 1 to 6 and/or to have a control device according to claim 7 to 8.

## Revendications

1. Procédé de commande destiné au déplacement semi-automatique d'un véhicule utilitaire entraîné présentant un capteur vers une position cible détectable, comprenant une détection d'une position relative du véhicule utilitaire par rapport à la position cible et la déduction, à partir de la position relative, d'une commande latérale automatique réglementaire du véhicule utilitaire, de telle sorte que la commande latérale, conjointement avec une commande longitudinale, déplace le véhicule utilitaire vers la position cible, dans lequel
- la présence d'un signal de commande longitudinale généré à l'aide d'une télécommande par un opérateur se trouvant à l'extérieur du véhicule utilitaire est en outre examinée par un récepteur de télécommande du véhicule utilitaire,
- dans lequel le déplacement du véhicule utilitaire en fonction de la commande latérale et de la commande longitudinale n'est déclenché qu'en cas de présence pour la première fois du signal d'activation, et
- dans lequel le déplacement est interrompu en l'absence du signal d'activation et le véhicule utilitaire est amené à l'arrêt, **caractérisé en ce que,** lors de la détection pour la première fois de la position relative comme position initiale, il est vérifié qu'un déplacement vers la position cible est vraiment possible depuis la position initiale, faute de quoi le déplacement n'est pas déclenché et l'opérateur, en particulier, en est informé.

2. Procédé de commande selon la revendication 1, dans lequel un signal de commande longitudinale dépendant du temps introduit par l'opérateur est en outre reçu par le récepteur de télécommande et le déplacement est effectué en fonction de la commande latérale et du signal de commande longitudinale reçu.

3. Procédé de commande selon l'une des revendications précédentes, comprenant une limitation de la vitesse maximale autorisée dans le cadre de la commande longitudinale.

4. Procédé selon la revendication 3, dans lequel la limitation de la vitesse maximale dépend d'une position relative actuelle, d'une progression du déplacement et/ou d'un état réel ou existant de la commande latérale.

5. Procédé selon l'une des revendications précédentes, dans lequel un signal de régulation de niveau généré par l'opérateur est en outre reçu par le récepteur de télécommande et, pendant le déplacement, un dispositif de régulation de niveau du véhicule utilitaire est guidé en fonction du signal de régulation de niveau reçu.

6. Procédé selon l'une des revendications précédentes, dans lequel, pendant le déplacement, il est vérifié que le reste du déplacement peut se terminer vraiment comme prévu et sans dommage, faute de quoi le déplacement est interrompu et l'opérateur, en particulier, en est informé.

7. Dispositif de commande destiné au déplacement semi-automatique d'un véhicule utilitaire entraîné comportant des systèmes électroniques de gestion de la circulation vers une position cible détectable, comprenant
- des moyens de détection configurés pour détecter une position relative du véhicule utilitaire par rapport à la position cible, et
- des moyens de commande latérale configurés pour, sur la base de la position relative détectée, réaliser de manière automatique et réglementaire une commande latérale du véhicule utilitaire, de telle sorte que la commande latérale, conjointement avec une commande longitudinale, déplace le véhicule utilitaire vers la position cible en agissant sur les moyens d'actionnement,
- des moyens de réception de télécommande configurés pour examiner une présence d'un signal d'activation généré à l'aide d'une télécommande par un opérateur se trouvant à l'extérieur du véhicule utilitaire,
- dans lequel le dispositif de commande est configuré pour ne démarrer le déplacement du véhicule utilitaire en fonction de la commande latérale et de la commande longitudinale qu'en cas de présence pour la première fois du signal d'activation et pour interrompre la poursuite du déplacement en l'absence du signal d'activation et amener le véhicule utilitaire à l'arrêt, **caractérisé en ce que,** lors de la détection pour la première fois de la position relative comme position initiale, il est vérifié qu'un déplacement vers la position cible est vraiment possible depuis la position initiale, faute de quoi le déplacement n'est pas déclenché et l'opérateur, en particulier, en est informé.

8. Dispositif de commande selon la revendication 7, dans lequel le récepteur de télécommande est configuré pour recevoir en outre un signal de commande longitudinale dépendant du temps introduit par l'opérateur, et le déplacement est effectué en fonction de la commande latérale et du signal de commande longitudinale reçu.

9. Véhicule utilitaire, en particulier véhicule tracteur entraîné, comportant des systèmes électroniques de gestion de la circulation, **caractérisé en ce qu'**il est configuré pour mettre en oeuvre le procédé de commande selon la revendication 1 à 6, **et/ou en ce qu'**il présente un dispositif de commande selon la revendication 7 à 8.
